# EUROPEAN PATENT SPECIFICATION

(11) **EP 3 392 130 B1**
(45) Date of publication and mention of the grant of the patent: **14.08.2019**
(21) Application number: 17201564.6
(22) Date of filing: 14.11.2017
(51) Int. Cl.: B62M 9/08

(54) **BICYCLE CRANKSET WITH ECCENTRIC CHAINRING AND ADJUSTABLE CRANKARM**
FAHRRADKURBELSATZ MIT EXZENTRISCHEM KETTENBLATT UND VERSTELLBAREM KURBELARM
PÉDALIER DE BICYCLETTE AVEC PLATEAU EXCENTRIQUE ET BRAS DE PÉDALIER RÉGLABLE

(30) Priority: 18.04.2017 TW 106112983
(43) Date of publication of application: 24.10.2018
(73) Proprietor: Drivetrain Tech Solution Inc., Taichung City (TW)
(72) Inventor: CHEN, PO-CHENG, Taichung City (TW)
(74) Representative: Cabinet Chaillot

(56) References cited:
- CN-U- 206 938 994
- US-A1- 2005 022 626
- US-A1- 2014 047 948

## Description

### BACKGROUND OF THE INVENTION

### 1. Technical Field

The present invention relates to a bicycle, and more particularly to a bicycle crankset with an eccentric chainring and an adjustable crankarm.

### 2. Description of Related Art

Typically, a bicycle is provided with a round chainring and a pair of crankarms connected to the chainring through a spider. A rider steps pedals of the crankarms to turn the chainring, so as to drive the bicycle forward. However, a motion of the crankarms is round, and a motion of feet of the rider is up and down. Therefore, lots of the power transmitted from rider's feet to the crankarms will loss.

When a rider is stepping the crankarms, the power is positive when the rider steps the crankarms downward, and the power is maximum when the crankarm is moved to a horizontal position. After the lowest position, the power is negative which is helpless to the moving of bicycle.

The modern bicycle provides an elliptical chainring to solve this problem. Taiwan patent no. 1399322 disclosed a bicycle chainring with different radiuses. This chainring provides different arms of force according to the position of the crankarm to improve the efficiency of stepping the crankarms.

U.S. patent no. 7,749,117 disclosed an elliptical chainring. The chainring is adjustable according to its position and shape to meet various needs of different riders. This patent also provides the chainring with the parameters the same as a normal chainring at the region when the rider is stepping downward to reduce the loading of knees.

Document US 2014/0047948, shows a crankset with a chainring, crankarms and a spider and discloses all the features of the preamble of claim 1.

### BRIEF SUMMARY OF THE INVENTION

In view of the above, the primary objective of the present invention is to provide a bicycle crankset, which is adjustable for its motion to obtain high torque output and high power efficiency.

In order to achieve the objective of the present invention, a bicycle crankset includes a chainring, a spider, and a crankarm. The chainring has a disk member and a plurality of teeth on an edge of the disk member to engage a chain. The spider is connected to the disk member of the chainring, and has a connecting bore and a plurality of recesses on an edge of the connecting bore. The crankarm has a plurality of protrusions to engage the recesses of the spider. The connecting bore is eccentric relative to the chainring, and the crankarm is able to be connected to the chainring in different angles by engaging the protrusions of the crankarm with different of the recesses of the spider to provide various paths of motion of the chainring.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of a preferred embodiment of the present invention;
FIG. 2 is a front view of the chainring and the spider of the preferred embodiment of the present invention;
FIG. 3 is a front view of the preferred embodiment of the present invention;
FIG. 4 is another front view of the preferred embodiment of the present invention;
FIG. 5 is a front view of the preferred embodiment of the present invention, showing the motion of the chainring and the crankarm;
FIG. 6 and FIG. 7 are front views of the preferred embodiment of the present invention, showing the crankarms mounted in different angles;
FIG. 8 is a front view of another preferred embodiment of the present invention, showing the elliptical chainring; and
FIG. 9 is a front view of yet another preferred embodiment of the present invention, showing an alternate spider.

### DETAILED DESCRIPTION OF THE INVENTION

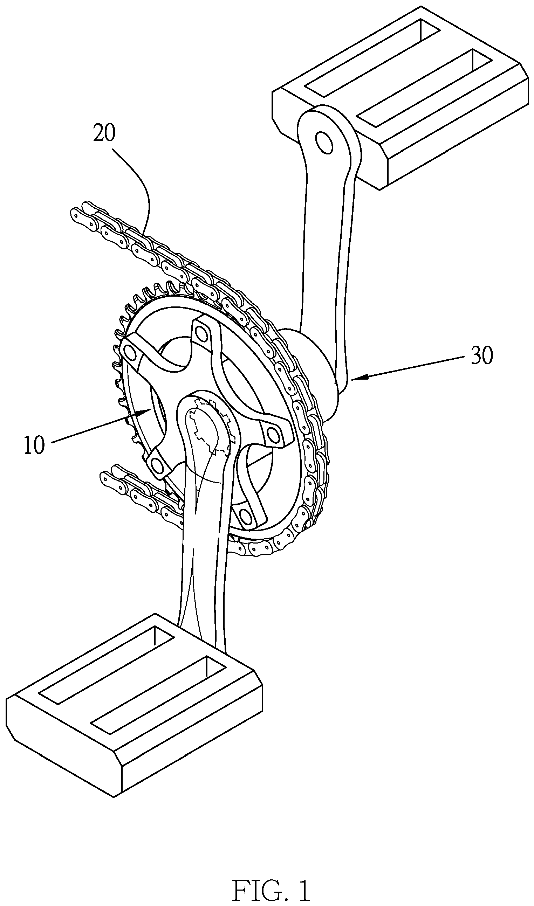

FIG. 1 shows a bicycle crankset of the preferred embodiment of the present invention, including a chainring 10, a chain 20 engaging the chainring 10, and a pair of crankarms 30 connected to the chainring 10 to turn the chainring 10 by stepping the carnkarms 30.

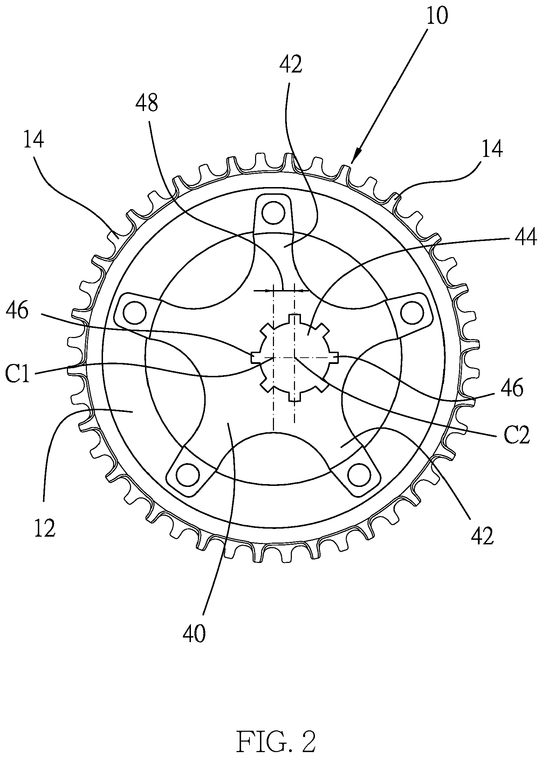

As shown in FIG. 2, the chainring 10 has a disk member 12, a plurality of teeth 14 on an edge of the disk member 12. The teeth 14 are in a round circumference. A spider 40 is connected to the disk member 12 of the chainring 10. The spider 40 has a plurality of connecting arms 42 to be connected to the disk member 12 by bolts or other fasteners. In another embodiment, the spider 40 is directly formed on the disk member 12.

The spider 40 has a connecting bore 44 and a plurality of recesses 46 on an edge of the connecting bore 44. The connecting bore 44 is not at a center of the spider 40, in other words, the connecting bore 44 is eccentric, so that an eccentric distance 48 is formed between a center C1 of the chainring 10 and a center C2 of the connecting bore 44.

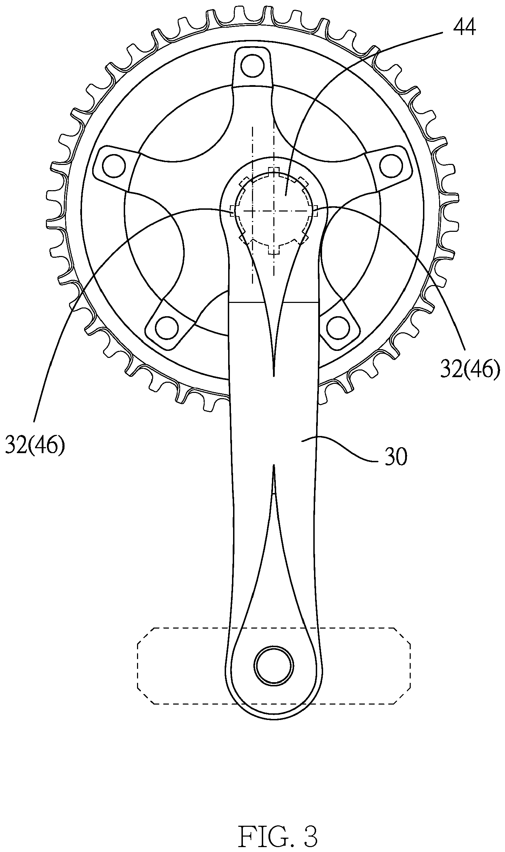

As shown in FIG. 3, one of the crankarm 30 has a plurality of protrusions 32 on an end thereof to engage the recesses 46 of the spider 40. In the present embodiment, the arrangement of the recesses 46 is regular, in other words, there are constant intervals between each two of the neighboring recesses 46, and the recesses 46 are arranged in a round circumference, while the arrangement of the protrusions 32 are complementary to the recesses 46. In another embodiment, the arrangement of the recesses 46 is irregular, and the protrusions 32 are complementary to the recesses 46.

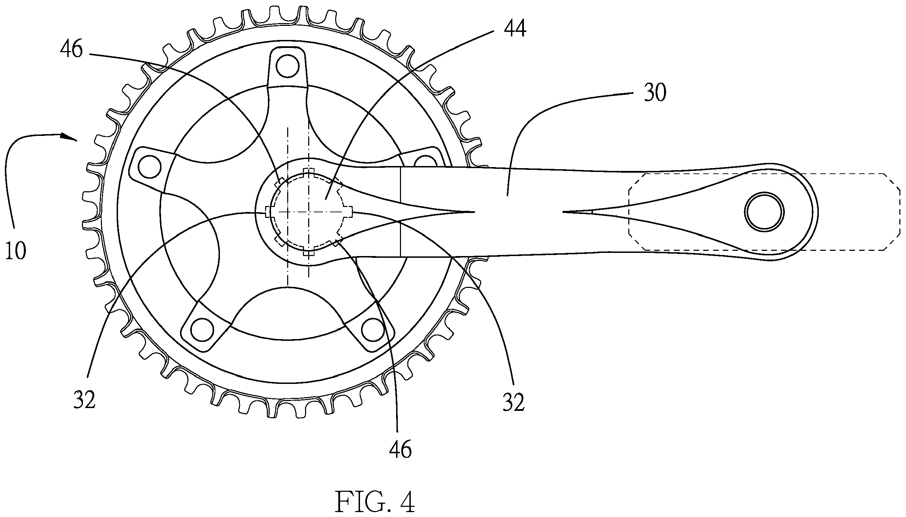

As shown FIG. 4, since the arrangements of the recesses 46 and the protrusions 32 are regular, the crankarm 30 may be connected to the spider 40 in different angles.

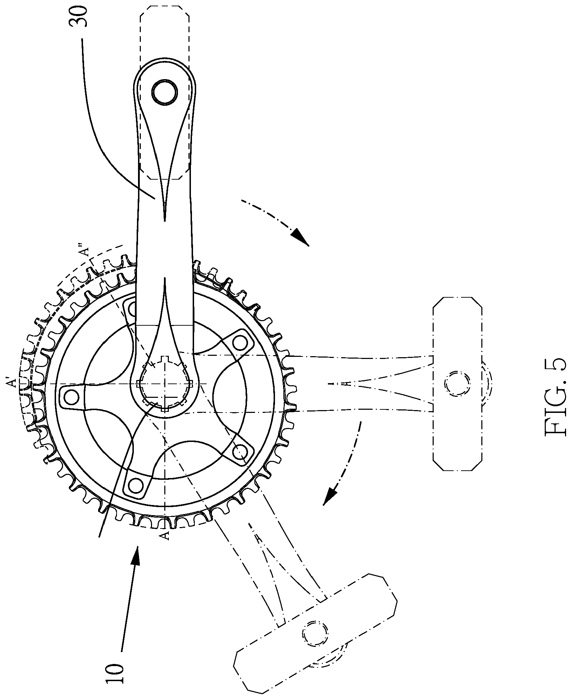

As shown in FIG. 5, since the crankarm 30 is eccentric, a motion of the chainring 10 is not round, and it may approach a motion of an elliptical chainring. Comparison to the motion of the elliptical chainring, a change of a curvature radius of a path of the motion of the chainring 10 of the present embodiment is smoother to provide a stable loading to the rider when he/she is stepping the crankarms 30 and a high efficiency of power transmission.

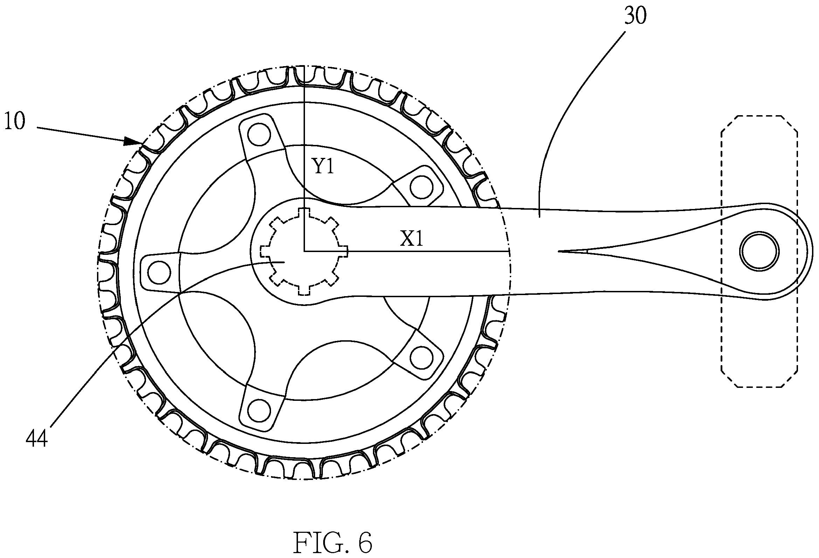

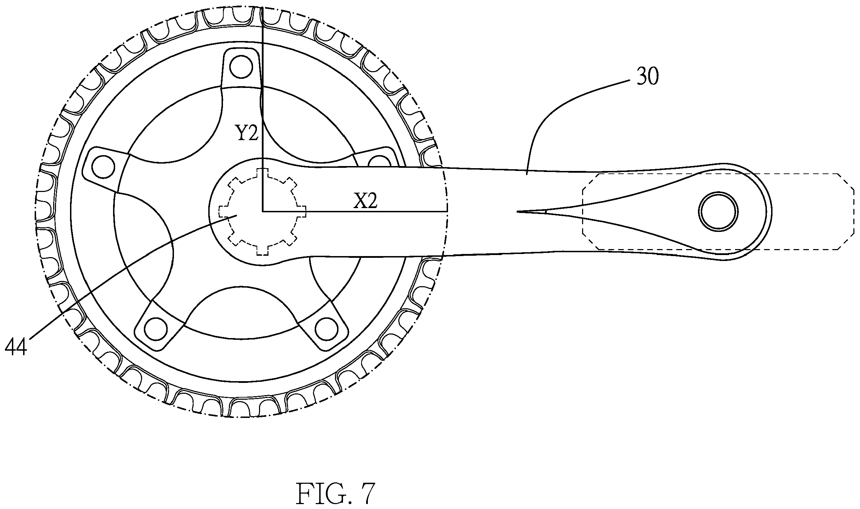

As shown in FIG. 6 and FIG. 7, when the crankarm 30 is connected to the spider 40 in different angles, distances between a center of the connecting bore 44 and tips of the teeth 14 at the same orientations will be different (comparing X1 of FIG.6 to X2 of FIG. 7, and Y1 of FIG.6 to Y2 of FIG. 7). As a result, a path of motion of the chainring 10 of FIG. 6 is different from that of the chainring 10 of FIG. 7. In other words, the path of motion of the chainring 10 is changeable by connecting the crankarm 30 to the chainring 10 in different angles.

In conclusion, the present embodiment provides the path of motion of the chainring 10 with a smooth change of the curvature radius thereof (FIG. 5), and the path of motion of the chainring 10 is changeable (FIG. 6 and FIG. 7) to provide an efficient power output when cycling on different roads.

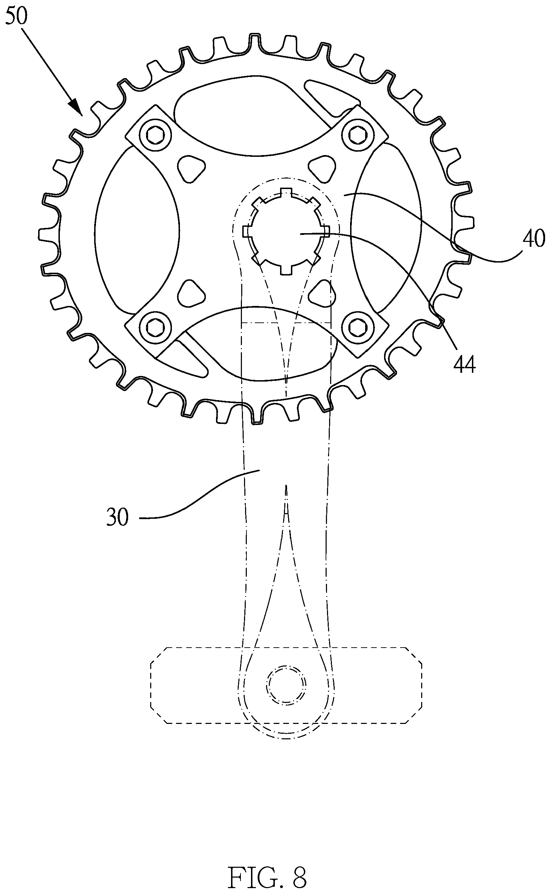

As shown in FIG. 8, another embodiment of the present invention provides an elliptical chainring 50, and the crankarm 30 is eccentrically connected to the chainring 50 through the spider 30. The same as above, the crankarm 30 may be connected to the chainring 50 in different angle, so that the path of motion of the chainring 50 is changeable as well.

The elliptical chainring 50 provides a noncircular path of motion while the eccentric crankarm 30 provides another changeable noncircular path of motion. The combination of the elliptical chainring 50 and the eccentric crankarm 30 provides various paths of motion of the chainring 50.

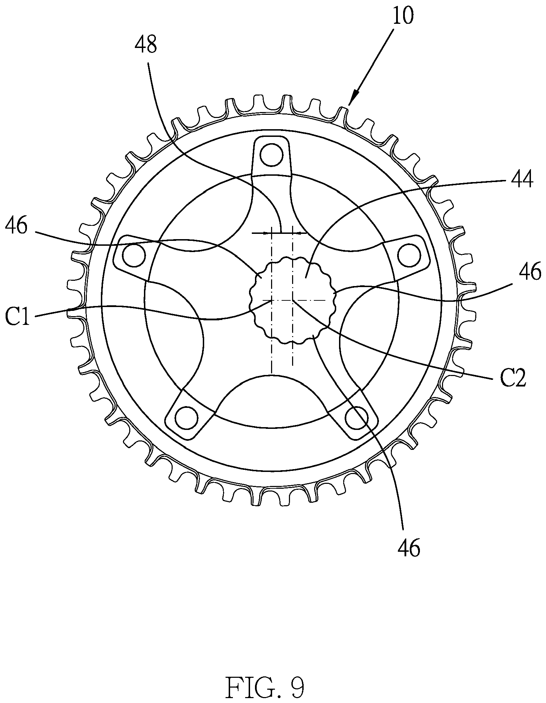

As shown in FIG. 9, yet another embodiment of the present invention provides the chainring 10 with an eccentric connecting bore 44, which has an eccentric distance 48 between the center C1 of the chainring 10 and the center C2 of the connecting bore 44. The connecting bore 44 has a weave-like edge to form the recesses 46, so that the crankarm 30 is able to be connected to the chainring 10 in different angle.

It must be pointed out that the embodiments described above are only some preferred embodiments of the present invention. All equivalent structures which employ the concepts disclosed in this specification and the appended claims should fall within the scope of the present invention.

## Claims

1. A bicycle crankset, which is adapted to connect to a chain (20), comprising:
a chainring (10) having a disk member (12) and a plurality of teeth (14) on an edge of the disk member (12) to engage the chain (20);
a spider (40), which is connected to the disk member (12) of the chainring (10), having a connecting bore (44) and a plurality of recesses (46) on an edge of the connecting bore (44); and
a crankarm (30) having a plurality of protrusions (32), wherein the carnkarm (30) is connected to the spider (40) by engaging the protrusions (32) with the recesses (46) of the spider (40);
**characterized in that** a center (C2) of the connecting bore (44) is not on a center of the disk member (12) of the chainring (10), and the crankarm (30) is able to be connected to the chainring (10) in different angles by engaging the protrusions (32) of the crankarm (30) with different of the recesses (46) of the spider (40) to provide various paths of motion of the chainring (10).

2. The bicycle crankset of claim 1, wherein the teeth of the chainring (10) are in an elliptical circumference.

3. The bicycle crankset of claim 1, wherein the teeth (14) of the chainring (10) are in an round circumference.

4. The bicycle crankset of claim 1, wherein the spider (40) has a plurality of connecting arms (42) to be connected to the disk member (12) of the chainring (10).

5. The bicycle crankset of claim 1, wherein the spider (40) is directly formed on the disk member (12) of the chainring (10).

## Patentansprüche

1. Fahrradkurbelsatz, der zum Verbinden mit einer Kette (20) geeignet ist, umfassend:
ein Kettenblatt (10) mit einem Scheibenelement (12) und einer Mehrzahl von Zähnen (14) an einem Rand des Scheibenelements (12), um in die Kette (20) einzugreifen;
einen Befestigungsstern (40), der mit dem Scheibenelement (12) des Kettenblattes (10) verbunden ist, mit einer Verbindungsbohrung (44) und einer Mehrzahl von Aussparungen (46) an einem Rand der Verbindungsbohrung (44); und
einen Kurbelarm (30) mit einer Mehrzahl von Vorsprüngen (32), wobei der Kurbelarm (30) mit dem Befestigungsstern (40) durch Eingriff der Vorsprünge (32) mit den Aussparungen (46) des Befestigungssterns (40) verbunden ist;
**dadurch gekennzeichnet, dass** sich eine Mitte (C2) der Verbindungsbohrung (44) nicht in der Mitte des Scheibenelements (12) des Kettenblattes (10) befindet und der Kurbelarm (30) mit dem Kettenblatt (10) durch Eingriff der Vorsprünge (32) des Kurbelarms (30) mit unterschiedlichen Aussparungen (46) des Befestigungssterns (40) unter verschiedenen Winkeln verbunden werden kann, um unterschiedliche Bewegungswege des Kettenblattes (10) bereitzustellen.

2. Fahrradkurbelsatz nach Anspruch 1, wobei die Zähne des Kettenblattes (10) in einer elliptischen Umfangslinie liegen.

3. Fahrradkurbelsatz nach Anspruch 1, wobei die Zähne (14) des Kettenblattes (10) in einer runden Umfangslinie liegen.

4. Fahrradkurbelsatz nach Anspruch 1, wobei der Befestigungsstern (40) eine Mehrzahl von Verbindungsarmen (42) aufweist, zur Verbindung mit dem Scheibenelement (12) des Kettenblattes (10).

5. Fahrradkurbelsatz nach Anspruch 1, wobei der Befestigungsstern (40) unmittelbar auf dem Scheibenelement (12) des Kettenblattes (10) ausgebildet ist.

## Revendications

1. Pédalier de bicyclette, qui est adapté pour être relié à une chaîne (20), comprenant :
un plateau (10) ayant un élément disque (12) et une pluralité de dents (14) sur un bord de l'élément disque (12) pour engager la chaîne (20) ;
un croisillon central (40), qui est relié à l'élément disque (12) du plateau (10), ayant un alésage de liaison (44) et une pluralité de renfoncements (46) sur un bord de l'alésage de liaison (44) ; et
une manivelle (30) ayant une pluralité de saillies (32), la manivelle (30) étant reliée au croisillon central (40) par engagement des saillies (32) avec les renfoncements (46) du croisillon central (40) ;
**caractérisé par le fait qu'**un centre (C2) de l'alésage de liaison (44) n'est pas un centre de l'élément disque (12) du plateau (10), et la manivelle (30) est apte à être reliée au plateau (10) dans différents angles par engagement des saillies (32) de la manivelle (30) avec différents renfoncements (46) du croisillon central (40) pour fournir divers trajets de déplacement du plateau (10).

2. Pédalier de bicyclette selon la revendication 1, dans lequel les dents du plateau (10) sont dans une circonférence elliptique.

3. Pédalier de bicyclette selon la revendication 1, dans lequel les dents (14) du plateau (10) sont dans une circonférence arrondie.

4. Pédalier de bicyclette selon la revendication 1, dans lequel le croisillon central (40) a une pluralité de bras de liaison (42) devant être reliés à l'élément disque (12) du plateau (10).

5. Pédalier de bicyclette selon la revendication 1, dans lequel le croisillon central (40) est formé directement sur l'élément disque (12) du plateau (10).
